# EUROPEAN PATENT APPLICATION

(11) **EP 0 864 796 A1**
(43) Date of publication of application: **16.09.1998**
(21) Application number: 98200732.0
(22) Date of filing: 09.03.1998
(51) Int. Cl.: F16L 27/00, F16L 21/08

(54) **Tensile strain resistant pipe coupling**

(30) Priority: 12.03.1997 NL 1005504
(71) Applicant: POLVA PIPELIFE B.V., 1600 AJ Enkhuizen (NL)
(72) Inventor: Guitoneau, Hans Edward, 1613 DH Grootebroek (NL)
(74) Representative: de Bruijn, Leendert C.

(57) **Abstract**

A tensile strain resistant pipe coupling for the ends of two pipes (1,2,22) directed towards each other, which have been coupled and sealed by means of a sleeve coupling (2,5,23), comprises supporting elements (7,17,24,25) which can be mounted on these ends, as well as ties (13,18) for interconnecting these fittings. At least two ties have been provided which allow rotary movements between the two supporting elements. Each supporting element has a breast pointing away from the other connecting pipe, upon which breast a supporting ring rests.

## Description

The invention concerns a tensile strain resistant pipe coupling for the ends of two pipes directed towards each other which have been coupled and sealed by means of a sleeve coupling, said pipe coupling comprising supporting elements at each one of these ends, as well as ties for interconnecting the supporting elements.

Such a pipe coupling is known from NL-A-6506819. This known pipe cooling comprises draw bolts, which extend along the coupling area and which form a very rigid, tensile strain resistant coupling. In this way the pipes are prevented from moving away from each other under the influence of internal excess pressure. Such a tensile strain resistant coupling may also be applied to T-couplings.

This known pipe coupling is less suited for application to pipelines which are laid in relatively soft ground. In those cases the pipeline may be subject to rather large displacements, e.g. as a consequence of subsidence caused by setting or putting pressure on the pipeline. The regular sleeve couplings between two pipes which also comprise flexible seal rings, in themselves indeed allow this subsidence. However, the rigid properties of the known tensile strain resistant pipe coupling do not allow these movements and thus there is a rigid piece which may cause problems.

The invention therefore aims at providing a pipe coupling with the desired tensile strain resistance on the one hand, and with sufficient flexibility to adjust to subsidence on the other hand. This aim is realized by means of providing at least two ties which allow rotary movements in relation to the supporting elements.

In relation to leading in the tensile forces into the pipes, the supporting elements at least comprise a ring-shaped fitting which is mounted around the radius of the pipe concerned. In addition, each fitting may have a breast pointing away from the other piece of pipe, upon which breast a supporting ring rests.

The ties may have various designs. According to a first option, each tie is flexible or articulated, and at both ends attached to a fitting. With regard to this tie, a flexible tension rod is preferred. Such ties make it possible for the tension coupling to adjust to the rotary movements of the pipes in all directions in relation to each other.

According to a practical design, each tension rod is provided with a loop put through the corresponding recess in the adjacent supporting ring, each loop containing a pin which is set against the side of the supporting ring which is pointed away from the other supporting ring.

Another tie variety may be rigid. According to a second option, each tie is in that case a tie rod with on both ends a coupling piece which has been mounted in a rotatable manner on the rotary shaft of a supporting ring.

The rotary movements which enable the pipe coupling to adjust to subsidence, are made possible if each fitting is provided with rotary shafts with parallel or converging center lines. The pipeline end concerned may, dependent on the clearance in the sleeve coupling, turn in relation to the ties, in such a way that it is possible to adjust to subsidence, if any.

The center lines of the rotary shafts of the fittings are preferably parallel to each other. In this design, the largest possible change of angle in a surface perpendicular to the rotary shafts is realized.

According to a simpler design, each fitting may be provided with two coaxial, radial rotary shafts. Each fitting is preferably ring-shaped and mounted around the circumference of a pipe.

The pipe coupling according to the invention is in the first place suited for a design with a loose sleeve. In that case a ring-shaped fitting is mounted on each piece of pipe which are both provided with a supporting ring.

Secondly, the pipe coupling may be provided with an integral sleeve. In that case the pipe with integral sleeve has been provided with an expansion with a supporting surface turned away from the other pipe, upon which expansion the corresponding supporting ring rests. The other pipe is provided with a fitting with a supporting ring.

The invention will be explained in more detail below by means of the figures.

Figure 1 shows a first design of the pipe coupling according to the invention.

Figure 2 shows a second design.

Figure 3 shows a rotated position of the second design.

Figure 4 shows a third design.

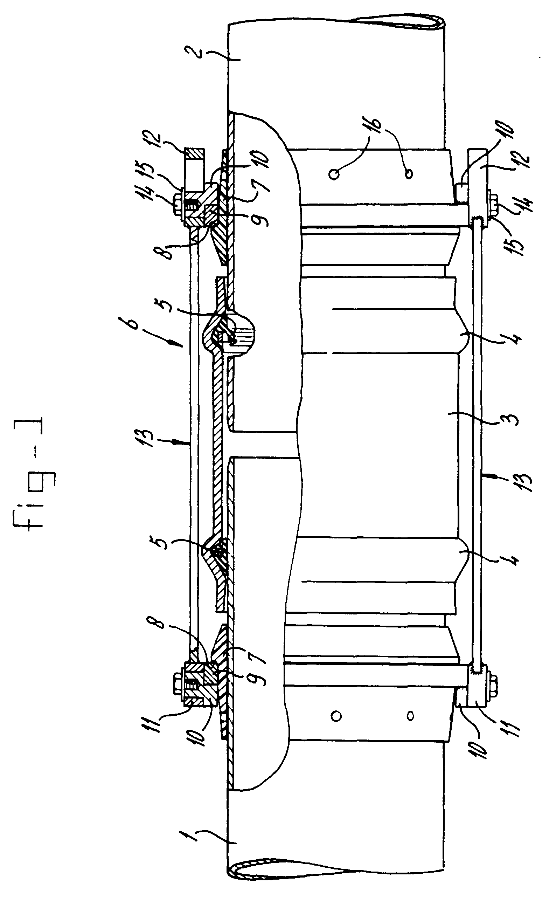

The pipe coupling between pipes 1 and 2 as represented in figure 1 in the first place comprises a loose pipe sleeve 3 with two ring-shaped bulges 4, each incorporating a flexible sealing ring 5 (already known). Due to these flexible sealing rings 5, and the minor clearance between the internal wall of pipe sleeve 3 and the exterior edge of the pieces of pipe 1, 2, the latter only allow minor angle movements in relation to each other. In the case of subsidence, e.g. as a consequence of settlements, or putting pressure on the pipeline, these movements may occur.

If this happens, there is the risk that the pieces of pipe 1, 2 are dislocated from pipe sleeve 3. Although the figure represents a co-axial coupling between two pieces of pipe 1, 2, this problem may also arise in other couplings, e.g. angle joints or T-couplings.

In order to prevent the pieces of pipe 1, 2 from moving away from each other and still allow minor angle movements of the pieces of pipe 1, 2 in relation to each other, the tensile strain resistant pipe coupling which has been presented in its entirety as number 6, has been provided. This tensile strain resistant pipe coupling 6 comprises two pipe fittings 7, which have been made out of plastic and are glued to the external surface of the pieces of pipe 1, 2. The glue has been introduced into the holes 16.

These pipe fittings 7 each comprise a breast 8 facing away from each other, against which a metal ring 9 rests. To the metal ring 9 shaft extensions have been welded holding rotary shafts around which the eyes 11, 12 of the tie rods represented as a whole as number 13, have been mounted. The eyes 12 are provided with a slotted hole-like space in such a way that there is some adjustment possible in the longitudinal direction of the pieces of pipe 1, 2. Threaded holes have been tapped in the shaft extensions 10 in which the bolts 14 have been screwed keeping the eyes 11, 12 in place by means of washers 15.

Instead of the rigid tie rods 13 with eyes 11, 12 as represented, it is also possible to interconnect the rings 9 by means of two flexible bands. To this end, the rings 9 are to be provided with slot-like openings through which the bands are put and secured.

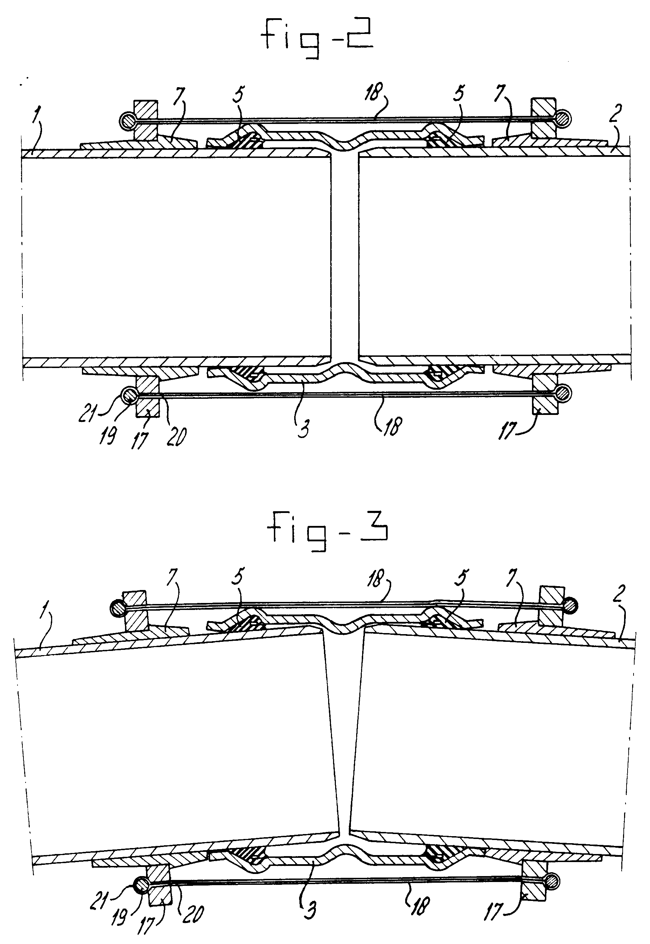

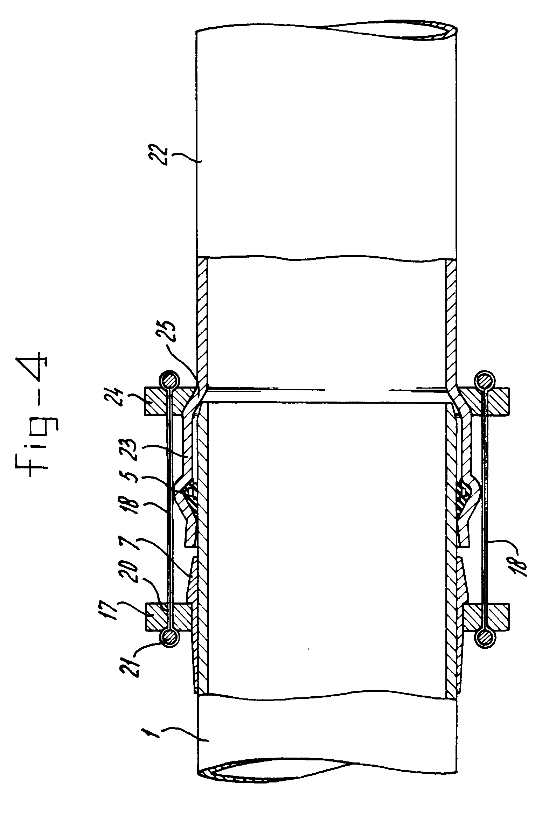

In the design represented in figures 2 and 3, the fittings 7 have been provided with rings 17 which have been interconnected by means of tie bands 18 positioned at two diametrically opposed locations. Each tie band has been put through a slot 20 into the rings 17 at both ends.

Each tie band 18 is provided with a loop 21 at both ends in which a pin 19 is introduced after the end in question of tie band 18 has been put through slot 20. In this way the rings are firmly secured.

As represented in figure 3, the pipe coupling may also absorb rotations in the plane between both tie bands 18 due to the somewhat flexible properties of the bands 18. Obviously, the pipe coupling may also absorb rotation in the opposite direction.

The tie bands may, for instance, be manufactured from suitable synthetic material, such as synthetic fabric.

The variety as shown in figure 4, concerns a pipe coupling in which pipe 22 has been provided with an integral pipe sleeve 23. The ring 24 is directly set against the pipe 22, more specifically on the diverging part 25 of it.

## Claims

1. Tensile strain resistant pipe coupling for the ends of two pipes (1, 2, 22) directed towards each other, which have been connected and sealed by means of a sleeve coupling (3, 5, 23), the pipe coupling comprising two supporting elements (7, 17, 24, 25) at each one of these ends, as well as ties (13, 18) for interconnecting the supporting elements (7, 17, 24, 25), characterized in that at least two ties (13, 18) hue been provided which allow rotary movements between the supporting elements (7, 17, 24, 25).

2. Pipe coupling according to claim 1, in which at least one supporting element comprises a ring-shaped fitting (7) which is mounted around the circumference of a pipe (1, 2, 22).

3. Pipe coupling according to claim 2, in which each fitting (7) has a breast (8) pointing away from the other piece of pipe, upon which breast (8) a supporting ring (9, 17) rests.

4. Pipe coupling according to claim 1, 2 or 3, in which each tie (18) is either flexible or articulated, and mounted to a fitting (7) on both ends.

5. Pipe coupling according to claim 4, in which each tie is a flexible tie band (18).

6. Pipe coupling according to claims 3, 4 and 5, in which each tie band (18) is provided with a loop (21) at both ends, which has been put through a corresponding recess (20) into the adjacent supporting ring (17), and through each loop (21) a pin (19) is introduced which is set against the side of the supporting ring (17) which is pointed away from the other supporting ring (17).

7. Pipe coupling according to claim 1, 2 or 3, in which each supporting ring (9) is provided with rotary shafts (10) with parallel or coinciding center lines, and each tie is a tie rod (13) with a coupling piece on both ends (11, 12), which has been mounted in a revolving manner on a rotary shaft (10) of a supporting ring (9).

8. Pipe coupling according to claim 7, in which the center lines of the rotary shafts (10) of both supporting rings (9) are parallel to each other.

9. Pipe coupling according to claim 7 or 8, in which each supporting ring (9) has two co-axial, radial rotary shafts (10).

10. Pipe coupling according to one of the claims 7-9, in which each coupling piece (12) of a tie rod (13) is provided with an elongated hole for the purpose of providing clearance with regard to absorbing the differences in length of the pipes (1, 2).

11. Pipe coupling according to one of the previous claims, in which the pipes (1, 2) have been coupled by means of a loose sleeve (3), and a ring-shaped fitting (7) has been mounted on each one of the pipes (1, 2).

12. Pipe coupling according to one of the claims 1-10, in which the pipes (1, 22) have been coupled by means of an integral sleeve (23) included in one of the pipes (22).

13. Pipe coupling according to claim 12, in which the pipe (22) with an integral sleeve (23) is provided with an expansion (25) which has a supporting surface facing away from the other pipe (1), against which expansion (25) the corresponding supporting ring (24) rests.
